**Europäisches Patentamt**

**European Patent Office**

**Office européen des brevets**

(11) Veröffentlichungsnummer: **0 100 833**
**B1**

(12) **EUROPÄISCHE PATENTSCHRIFT**

(45) Veröffentlichungstag der Patentschrift:
**10.12.86**

(21) Anmeldenummer: **83105591.8**

(22) Anmeldetag: **07.06.83**

(51) Int. Cl.⁴: **A 23 L 2/02,** A 23 L 2/16,
A 23 L 2/30, A 23 N 1/00

(54) Verfahren und Anordnung zur Herstellung von Citrusfruchtsäften und Getränken auf der Grundlage von Citrusfruchtsäften mit Fruchtfleisch.

(30) Priorität: **07.06.82 DE 3221509**

(43) Veröffentlichungstag der Anmeldung:
**22.02.84 Patentblatt 84/8**

(45) Bekanntmachung des Hinweises auf die Patenterteilung:
**10.12.86 Patentblatt 86/50**

(84) Benannte Vertragsstaaten:
**AT BE CH DE FR GB LI LU NL**

(56) Entgegenhaltungen:
**CH - A - 87 380**
**DE - A - 2 604 009**
**DE - C - 696 796**
**FR - A - 1 497 305**
**GB - A - 367 105**
**US - A - 2 628 168**

(73) Patentinhaber: **Firma Peter Eckes, Bahnstrasse 6,
D-6501 Nieder-Olm (DE)**

(72) Erfinder: **Willburger, Otto L., Dipl.-Ing., Berliner
Strasse 35, D-6501 Nieder-Olm (DE)**
Erfinder: **Schmidt, Werner, Burgunderstrasse 46,
D-6501 Saulheim 1 (DE)**
Erfinder: **Weissenbach, Manfred J., Am Klosterberg 11,
D-6509 Bermersheim v.d.H. (DE)**

(74) Vertreter: **Schubert, Siegmar, Dipl.-Ing. et al,
Patentanwälte Dr. V. Schmied-Kowarzik Dr. P. Weinhold
Dr.-Ing. G. Dannenberg Dr. D. Gudel Dipl.-Ing. S.
Schubert Dr. P. Barz Grosse Eschenheimer Strasse 39,
D-6000 Frankfurt am Main 1 (DE)**

ACTORUM AG

## Beschreibung

Die Erfindung betrifft ein Verfahren zur Herstellung von Citrusfrüchten und Getränken auf der Grundlage von Citrusfruchtsäften mit Fruchtfleisch nach dem Oberbegriff von Anspruch 1.

Die Erfindung betrifft ferner eine Anordnung zur Ausübung des erfindungsgemässen Herstellungsverfahren.

Die meisten der bisher bekannten fruchtfleischhaltigen Säfte, Nektare und Fruchtsaftgetränke enthalten Fruchtfleisch als mehr oder weniger feine Schwebeteilchen, die beim Pressvorgang der Früchte anfallen. Es ist auch bereits versucht worden, Fruchtsäfte, Nektare und Fruchtsaftgetränke herzustellen, die langfaseriges Fruchtfleisch — Fruchtpulpe genannt — in Grösse, Aussehen und Verteilung ähnlich dem eines frisch gepressten Saftes enthalten. Die Verarbeitung der erforderlichen Rohstoffe bereitet jedoch aufgrund der langfaserigen Bestandteile erhebliche Schwierigkeiten; es kommt zu Verstopfungen in Teilen der Herstellungsanlagen wie Rohrleitungen, Armaturen, Anlagenaggregaten, Plattenerhitzern, Pumpen. Beim Abfüllen hat es sich als praktisch unmöglich erwiesen, den Gehalt an Fruchtfleischfasern und Vesikeln, d.h. Saftbeuteln, im abgefüllten Produkt konstant zu halten. Ausserdem war bisher kein Verfahren bekannt, das es gestattete, die Vesikel und Fruchtfleischfasern während der Produktausmischung, -pasteurisation und -entgasung, des Abfüllprozesses und auch nach dem Abfüllen gleichmässig verteilt zu halten, so dass sie nicht aufschwimmen und z.B. bei der Abfüllung in Flaschen Stopfen im Flaschenhals bilden.

Zu der Erfindung gehört die Aufgabe, unter Vermeidung der voranstehenden Nachteile ein Verfahren und eine Anordnung zur Herstellung und Heissabfüllung von stillen Citrusfruchtsäften und Getränken auf der Grundlage von Citrusfruchtsäften in grosstechnischem Massstab zu schaffen, bei dem ausgehend von üblichen Rohstoffen ein Produkt erhalten wird, das einen gleichbleibend hohen Gehalt an langfaserigem Fruchtfleisch in Grösse, Aussehen und Verteilung ähnlich dem eines frisch gepressten Saftes aufweist, ohne dass es während der Produktausmischung, -pasteurisation, -entgasung und -abfüllung zu Produktentmischung, Veränderung der Fruchtfleischstruktur oder Stopfenbildung in der Verpackung bei oder nach der Abfüllung kommt.

Die Citrusfruchtsäfte sollen insbesondere einen hohen Gehalt an langfaserigem Fruchtfleisch aus dem essbaren Anteil der Früchte aufweisen. Hierunter wird ein Gehalt von 3 bis 5 Volumenprozenten Fruchtfleisch verstanden. Das langfaserige Fruchtfleisch soll eine Länge bis 20 mm aufweisen.

Es ist zwar bereits ein Verfahren zur Hitzebehandlung von Citrussäften bekannt (US-A-2 628 168), bei dem der trübe Saft während der Pasteurisation und der Vakuumbehandlung ohne Turbulenz durch einen Wärmeaustauscher geführt wird, und zwar so, das mit einer laminaren Strömung ein hoher Temperaturgradient in dem Saft aufrechterhalten wird. Damit der Saftfilm, der unmittelbar an der beheizten Oberfläche strömt, nicht zu lang erhitzt wird, ist vorgesehen, dass der Saftfilm unterbrochen und durch einen neuen Film dadurch ersetzt wird, dass Wasserdampf an der beheizten Oberfläche gebildet wird. Diese Hitzebehandlung dient zur Pektinesteraseninaktivierung. Die dazu angewendete Strömung des Saftes ist nicht geeignet, langfaseriges Fruchtfleisch nach vorausgehender Durchmischung in Suspension zu halten. — Die dazu vorgesehene bekannte Vorrichtung enthält Zirkulationspumpen, welche die Strömung des Safts durch Wärmeaustauscher aufrechterhalten sollen. Diese Zirkulationspumpen sind in einem Rohrleitungsnetz ausserhalb der Wärmeaustauscher angeordnet.

Das erfindungsgemässe Verfahren ermöglicht die Herstellung praktisch gasfreier (Sauerstoff, Kohlendioxid, Stickstoff) Fruchtsäfte, Nektare oder Fruchtsaftgetränke, die neben dem üblichen, feine Trübungsbestandteile enthaltenden Fruchtsaft einen definierten und deutlich sichtbaren Gehalt an relativ grossen Vesikeln und Fruchtfleischfasern aus dem Endokarp der Früchte enthalten. Diese langfaserigen Bestandteile werden bei herkömmlichen Produktionsverfahren für Fruchtsäfte z.B. über sogenannte Finisher abgetrennt und sollten möglichst vollständig erhalten sein; d.h. ihre Gewinnung erfolgt möglichst schonend. Auch die erfindungsgemäss angewandten Verfahrensmassnahmen dienen dazu, die bei der Ausmischung der Rohstoffe ursprünglich vorliegende Fruchtfleischstruktur während des Verarbeitungsprozesses nicht zu verändern.

Die Rohstoffe für das erfindungsgemässe Verfahren, z.B. Fruchtsäfte, Fruchtsaftkonzentrate mit oder ohne Fruchtfleisch, langfaserige Fruchtpulpe, Vesikel, Fruchtsaftaromen können nach herkömmlichen Methoden hergestellt werden. Vorzugsweise werden tiefgekühlte Rohstoffe eingesetzt, die dann entsprechend der gewünschten Rezeptur und schnelleren Auftauung mit Warmwasser vermischt werden. Erforderlichenfalls können auch übliche Additive zugesetzt werden, z.B. Zucker, Vitamine und Konservierungsstoffe.

Um die im Produkt, zum Teil auch gelöst, enthaltenen Gase (Sauerstoff, Kohlendioxid, Stickstoff) möglichst weitgehend auszutreiben, wird das homogene und gegebenenfalls pasteurisierte Produkt konstant unter vermindertem Druck, vorzugsweise 500–600 mbar, bei einer Temperatur von z.B. 90–95°C bzw. 120–200 mbar bei einer Temperatur von z.B. 50–60°C entgast. Die Verweilzeit im Entgaser beträgt üblicherweise 30–120 Sekunden und kann in Abhängigkeit zur gewünschten bzw. notwendigen Entgasungsintensität durch Veränderung der durchschnittlichen Füllmenge variiert werden.

Da mit der Entgasung eine Aroma-Ausdampfung einhergeht, wird vorzugsweise das bei der Entgasung entweichende dampfförmige Gemisch doppelstufig mittels Frischwasser und Kältemittel kondensiert, und das zurückgewonnene aromatische Kondensat wird wieder in den entgasten Produktstrom kontinuierlich und in quantitativ äquivalenter Menge eingespeist.

Das in der Ausmischstufe schonend und ohne Lufteinschlag homogen ausgemischte Produkt kann in Abhängigkeit zur gewünschten Entgasungsintensität vor oder nach dem Entgasen pasteurisiert werden. Die Pasteurisation wird wegen der Verstopfungsgefahr nicht in üblichen Plattenwärmetauschern durchgeführt, sondern sie erfolgt produktschonend in Doppelrohrwärmetauschern, die zu der erfindungsgemässen Anordnung gehören. Die Pasteurisationstemperatur beträgt gewöhnlich wegen des Fruchtfleischanteils 90–95°C, die Durchlaufzeit im Doppelrohrwärmetauscher, und zwar in dessen noch zu beschreibender zweiten Erhitzungsstufe, ca. 110 Sekunden. Bei Hochtemperatur-Entgasung im noch zu beschreibenden Vakuum-Entgaser beträgt die Durchlaufzeit 30–120 Sekunden, die gleichzeitig zur Verlängerung der Pasteurisationszeit dient.

Das vakuumentgaste und pasteurisierte Produkt wird schliesslich einer Abfülleinrichtung zugeführt, z.B. einem sogenannten Vakuumfüller, und dort in geeignete Behälter, z.B. Flaschen, Dosen, Kartonverpackungen heiss abgefüllt.

Um während des Pasteurisierens, Entgasens und Abfüllens eine Entmischung des Produkts zu verhindern, wird das Produkt vorzugsweise auch während dieser Prozesse gerührt, und zwar mit gegenüber dem vorangehenden Mischvorgang verminderter Geschwindigkeit, so dass es nicht zu einem Einschlagen von Luft und einer Verletzung, Zerstückelung oder Verkürzung des Fruchtfleisches kommt.

Als Rührer werden vorzugsweise sogenannte Leitstrahlmischer eingesetzt, die je einen Rotor aufweisen, der in einem an einem Statorrohr angeschweissten schlitzlosen Stator drehbar ist. Vorzugsweise ist der Leitstrahlmischer mit einem schlitzlosen Statorrohr von 350 mm Aussendurchmesser ausgebildet und mit einer auf den Rotor wirkenden Geschwindigkeit (Mindestgeschwindigkeit) von 300 bis 700 UpM betrieben.

Die Mischgeschwindigkeit bzw. Rührgeschwindigkeit ist niveaugesteuert und abhängig von der Füllstandshöhe des Produkts umschaltbar. Damit kann das Produkt während des eigentlichen Ausmischens mit hoher Geschwindigkeit intensiv durchgemischt werden, wenn der Füllstand hoch ist. Während des anschliessenden Entleerens des Ausmischtanks, wenn der Füllstand abfällt, wird hingegen der Rührer auf eine niedrigere Geschwindigkeit umgeschaltet, die ausreicht, um die Mischungsbestandteile, insbesondere das langfaserige Fruchtfleisch in Suspension zu halten. Die Geschwindigkeit kann durch polumschaltbare Elektromotore oder durch ein stufenlos regelbares Getriebe eingestellt werden.

Die Kenngrössen des Leitstrahlmischers und dessen Mischgeschwindigkeit sowie dessen Einbautiefe und Einbauwinkel sind so an die Behälterform angepasst, dass eine Verletzung oder Zerstückelung des Fruchtfleischs sicher vermieden wird. Beispielsweise haben sich eine Einbautiefe von 900 mm und ein Einbauwinkel von 55° zur lotrechten Behälterwand als vorteilhaft herausgestellt. – Die Bodenform des Ausmischtanks oder eines anderen Behälters, in dem der Rührer angeordnet ist, weist hier eine gute Suspensionshaltung, vorzugsweise eine asymmetrische Form, auf.

Der Entgaser besteht im wesentlichen aus einer mit einer Vakuumpumpe verbundenen Unterdruckkammer. In dieser wird das homogen vermischte und gegebenenfalls bereits pasteurisierte Produkt über eine 45°-Kegeleinlaufdüse rundum im Radius von 360° versprüht. Vorzugsweise ist der Entgaser als Hochtemperaturentgaser ausgebildet.

Zur Pasteurisation dient nach den Ansprüchen 8 und 9 mindestens ein mit einem Vorlaufgefäss versehener Doppelrohrwärmetauscher, der zwischen dem Ausmischtank und dem Entgaser geschaltet ist.

Vorzugsweise ist zur Pasteurisierung und produktabhängigen Entgasung ein zweistufiger Doppelrohrwärmetauscher vorgesehen, dessen erste Stufe in Flussrichtung vor den Entgaser geschaltet ist und dessen zweite Stufe wahlweise entweder ebenfalls vor den Entgaser geschaltet ist oder hinter dem Ausgang des Entgasers angeordnet ist. Bei der erst genannten Schaltung findet eine stärkere Entgasung statt; sie wird vorzugsweise bei fruchtfleischhaltigen Produkten angewendet. Im Anschluss an den Ausgang des Entgasers bzw. die zweite Stufe des Doppelrohrwärmetauschers ist eine Abfülleinrichtung angeordnet, in der das Produkt z.B. auf Flaschen, Dosen, Kartonverpackungen heiss abgefüllt wird.

Im Doppelrohrwärmetauscher wird nach Anspruch 10 vorteilhaft eine Wärmerückgewinnung angewandt, wobei zunächst eine Produktanwärmung auf 50–60°C stattfindet. Das durch die Behälter- bzw. Packungsrückkühlung mittels Wasserberieselung und/oder -sprühung im Rückkühler anfallende erwärmte Wasser wird mit der Rekuperationspumpe zu dem dampfbeheizten Gegenstromapparat gepumpt, in dem nur noch die für die Safterwärmung notwendige Wassernacherhitzung stattfindet.

Wenn ein zweistufiger Doppelrohrwärmeaustauscher vorgesehen ist, findet die letzte Produkt-Erhitzung auf Pasteurisationstemperatur von z.B. 95°C in der zweiten Stufe mittels temperaturgesteuertem Heisswasser-Sekundärkreislauf (über Gegenstromapparat) statt.

Nach Anspruch 12 wird in einem wirkungsvollen Anlagenteil die unerwünschte Auswirkung der Aroma-Ausdampfung in dem Verdampfer rückgängig gemacht. Hierzu wird im einzelnen die zweistufige Kondensationseinrichtung mit Frischwasser bei ca. 10–15°C und mit einem Kältemittel bei ca. −5°C beaufschlagt. Vorzugsweise ist der Anlagenteil nach Anspruch 12 so ausgelegt, dass alternativ in Abhängigkeit von dem zu erzielenden Produkt-Entgasungseffekts sowohl bei z.B. 50–60° oder aber bei z.B. 90–95°C unter Unterdruck entgast werden kann und trotzdem auch bei letztgenannter Hochtemperatur-Entgasung die volle gewünschte Flüssigaroma-Rekuperation gewährleistet ist.

Durch den in dem Entgaser angeordneten Rührer nach Anspruch 13 wird eine intensivere Entgasung erreicht, und eine Sedimentation des Fruchtfleisches wird vermieden. Die Geschwindigkeit des Rührers ist niveaugesteuert, damit kein Gaseinschlag erfolgt.

Durch die bevorzugte Ausgestaltung der Anordnung nach Anspruch 14 wird eine schädliche Auswirkung einer zu hohen Temperatursteigerung in dem Entgaser vermieden. Diese Auswirkung besteht darin, dass bei zu hoher Temperatur das Produkt zu viel Aroma verliert, welches auch nicht durch Kondensation voll zurückgewonnen werden kann. Um dies zu vermeiden, wird, wenn die Ablauftemperatur des entgasten Produktes einen an den Thermostaten voreingestellten Wert überschreitet, der Druck in dem Entgaser durch Zufuhr von unter Atmosphärendruck stehender Luft angehoben. Dadurch bricht also der Unterdruck weitgehend zusammen und es tritt deswegen kein Auskochen des Produktes ein. Wenn die Maximaltemperatur wiederum unterschritten wird, schliesst das Magnetventil und der vorgegebene Unterdruck kann sich wieder einstellen.

Normalerweise, d.h. wenn die Maximaltemperatur nicht überschritten wird, bleibt ein vorgegebener Unterdruck in dem Entgaser vorzugsweise konstant. Hierzu wird nach Anspruch 15 ein Unterdruckhalteventil an dem Entgaser vorgesehen. Dieses Unterdruckhalteventil ist insbesondere mit einer Druckeinstellskala versehen, die durch Federkraft verstellt werden kann. Damit wird der Unterdruck über die gesamte Entgasungszeit bzw. Betriebsdauer des Entgasers unabhängig von der in dem Entgaser herrschenden Produkttemperatur aufrecht erhalten.

Zur Reinigung des Entgasers nach Anspruch 16 gestattet das Überdruckventil eine Überdrucksterilisation beispielsweise bei 120°C, während die Reinigungssprühkugel zum Reinigen des Entgaserinneren im Durchlaufverfahren im geschlossenen System vorgesehen sind.

Durch die in die Produktablaufleitung des Entgasers eingebaute Rohrsonde, welche die Absaugpumpe unverzögert abschaltet, wird ein Trockenlaufschutz dieser Absaugpumpe gewährleistet und es werden Luft- und/oder Gaseinschläge in das Rohrleitungssystem vermieden. Vorteilhaft wird ferner durch einen von der Rohrsonde erzeugten elektrischen Impuls ein Verpackungseinlaufsstopper der Fülleinrichtung betätigt, wodurch die Fülleinrichtung von noch darin befindlichen Verpackungen leergefahren wird. Vorteilhaft ist die Absaugpumpe erst nach erneuter Wiederbefüllung des Entgasers auf einen normalen Füllstand einschaltbar, was durch einen eingebauten Schwimmerschalter initiiert wird.

Durch die Ausgestaltung der Anordnung nach Anspruch 18 wird das Regelventil nicht nur dazu eingesetzt, den Füllstand in dem Entgaser in Verbindung mit dem Schwimmerschalter selbsttätig auf ein gewünschtes Niveau zu regeln, indem der Produktzufluss geregelt wird. Vielmehr wird das Regelventil durch Handsteuerung betätigt auch dazu eingesetzt, im Saftanfahr- und Abfahrbetrieb den Produktzufluss so zu steuern, dass keine Vermengung mit dem zuvor die Anlage, insbesondere den Unterdruckentgaser, durchlaufenden Wasser zur Reinigung eintritt. Hierzu wird ein in der Produktzufuhrleitung vor dem Regelventil angeordnetes Schauglas beobachtet.

Durch die Anordnung von Durchfluss-Schaugläsern und Regulier- und Probeentnahmehähnen in den von der Kondensationseinrichtung abgehenden Aromakondensatleitungen ist eine sowohl qualitative als auch quantitative Flüssigaroma-Mengenerfassung der mit unterschiedlichen Kühlflüssigkeiten und unterschiedlicher Temperatur rekuperierten Aromakondensaten möglich.

Durch die Anordnung eines niveaugesteuerten geschwindigkeitsumschaltbaren Rührers in dem Vorlaufgefäss wird eine Entmischung des Produkts vermieden und eine Reinigung im Durchlaufverfahren ermöglicht bzw. verbessert.

Durch die Anordnung einer Minimum-Niveausonde in dem Vorlaufgefäss und dessen Verbindung mit einem Umschaltventil nach Anspruch 21 kann das Produkt statt in die Abfülleinrichtung in das Vorlaufgefäss zurückgeführt werden, so dass keine Beinträchtigung von Anlagenteilen durch Trockenlauf eintreten kann. Dieser Kreislauf wird solange aufrechterhalten, bis eine ebenfalls im Vorlaufgefäss angeordnete Maximumsonde signalisiert, dass das Produkt einen vorgegebenen Füllstand erreicht hat. Gleichzeitig mit dem Produktkreislauf kann durch einen von der Minimumniveausonde abgegebenen elektrischen Impuls ein Verpackungs-Einlaufstopper der Abfülleinrichtung aktiviert werden, so dass die Abfülleinrichtung noch von den darin befindlichen Verpackungen leer gefahren wird. Gleichzeitig kann ein optisches und akkustisches Signal den Störfall anzeigen.

Weiterhin ist vorteilhaft in der Abfülleinrichtung ein niveaugesteuerter Rührer vorgesehen, dessen Geschwindigkeit ebenfalls einem schwankenden Flüssigkeitsniveau angepasst werden kann, um einerseits eine Sedimentation bzw. Entmischung zu vermeiden, andererseits aber auch keinen Lufteinschlag und keine Zerstörung des Fruchtfleisches eintreten zu lassen.

Zu dem letztgenannten Zweck sind die Rührer in dem Vorlaufgefäss, dem Entgaser und der Abfülleinrichtung ähnlich wie der Rührer in dem Ausmischtank vorteilhaft als Leitstrahlmischer ausgebildet.

Durch die Dimensionierung des Entgasers bei Hochtemperaturentgasung nach Anspruch 24 wirkt der Unterdruckentgaser in vorteilhafter Weise gleichzeitig als Heisshalter für das auf Pasteurisationstemperatur gebrachte Produkt. Die dadurch bewirkte Verlängerung der Produktpasteurisationszeit zusätzlich zu der Pasteurisationszeit in dem Doppelrohrwärmetauscher auf etwa 30 bis 120 Sekunden werden durch Fruchtfleisch vermehrt eingeschleppte Mikroorganismen sicher abgetötet. Gleichzeitig wird die Entgasung verbessert. Ein zusätzlicher Röhrenheisshalter wird eingespart und die Produktablaufleitung des Unterdruckentgasers ist direkt mit der Abfülleinrichtung verbunden.

Gemäss Anspruch 25 ist in vorteilhafter Weise bei Stillstand der Abfülleinrichtung bzw. bei vollem Saftkessel der Abfülleinrichtung die von dem Unterdruck-Entgaser abgehende Produktablaufleitung sowohl bei Hochtemperaturentgasung, d.h. bei 90–95°C, als auch bei Warmentgasung, d.h. bei 50–60°C unter Umgehung der Abfülleinrichtung so zu dem vor dem Vorlaufgefäss angeordneten kühlenden Doppelrohrwärmeaustauscher umschaltbar, dass das heisse Produkt vor Wiedereintritt in das Vorlaufgefäss auf eine Temperatur unter 40°C zurückgekühlt wird. Die temperaturgesteuerte Rückkühlung erfolgt mit Frischwasser, wobei das anfallende Warmwasser zur Wärmerückgewinnung weiterverwendet werden kann.

Durch die weitere Ausgestaltung der Temperatursteuerungseinrichtungen in den zur Pasteurisierung vorgesehenen Doppelrohrwärmetauschern werden Produktüberhitzungen und sich daraus ergebende Produktschädigungen sicher vermieden. Hierzu kann mit Regelinstrumenten eine maximale Heisswassertemperatur eingestellt werden.

Durch die Verwendung einer besonderen in Anspruch 27 angegebenen Kegeleinlaufdüse in dem Entgaser wird eine gegenüber bisherigen fixierten Einlaufdüsen dünnstrahligere, fächerförmige Produktversprühung erreicht. Das Produkt wird damit auch bei stark schwankendem Produktzulaufdruck bzw. -menge sehr gut vorentgast.

Mit der Ausgestaltung der Anordnung nach Anspruch 28 wird erreicht, dass kein unterpasteurisiertes Produkt abgefüllt wird bzw. Verpackungen durch das heisse Produkt nicht mehr ausreichend desinfiziert werden. Dies geschieht dadurch, dass auch im Störungsfalle bzw. bei Füllerstillstand die Temperatur des Produkts in dem Füllerkessel nie unter einen vorgegebenen Wert, z.B. 85°C abfallen kann, der mit dem Minimum-Maximum-Thermofüller vorgegeben wird.

Erfolgt infolge Füllerstillstands oder einer sonstige Störung eine Absenkung der Temperatur im Füllerkessel, so läuft die ansaugende Rückspeisepumpe an, die das Produkt aus dem Füllerkessel mit einer gegenüber der Abfüll-Leistung reduzierten Leistung absaugt. Das Produkt fliesst über den kühlenden Doppelrohrwärmetauscher, indem es vor Wiedereintritt in das Vorlaufgefäss temperaturgesteuert zurückgekühlt wird, in dieses Vorlaufgefäss und kann von dort zum erneuten Pasteurisieren abfliessen.

Eine weitere Massnahme, um eine unzureichende Pasteurisierung zu vermeiden, ist in Anspruch 29 angegeben. Hiernach wird das Produkt solange im Kreislauf geführt, bis die Produkttemperatur auf die gewünschte eingestellte Pasteurisationstemperatur angehoben wird. Synchron zu der Umschaltung des Produktkreislaufs kann der Verpackungs-Einlaufstopper betätigt werden, wodurch die Abfülleinrichtung von noch darin befindlichen Verpackungen leergefahren wird.

Gemäss Anspruch 30 sind Fördereinrichtungen zum Fördern des Produktes zwischen den einzelnen Anlagenteilen zum produktschonenden Transport ausgelegt, d.h. so, dass keine Verletzungen, Zerstückelungen oder Verkürzungen des Fruchtfleisches in nennenswertem Masse auftreten. Hierzu werden die Kreiselpumpen oder selbstansaugenden Kreiskolbenpumpen vorzugsweise mit gegenüber ihrer Nenndrehzahl verringerter Drehzahl und offenen Laufrädern betrieben.

Die Erfindung wird im folgenden anhand der Zeichnung, in der ein bevorzugtes Ausführungsbeispiel der Gesamtanordnung zur Herstellung eines Orangensaftes dargestellt ist, näher erläutert. Es zeigen:

Figuren 1–5 ein Fliessbild der Gesamtanordnung und

Figur 6 eine Einzelheit der Gesamtanordnung, einen Leitstrahlmischer im Längsschnitt.

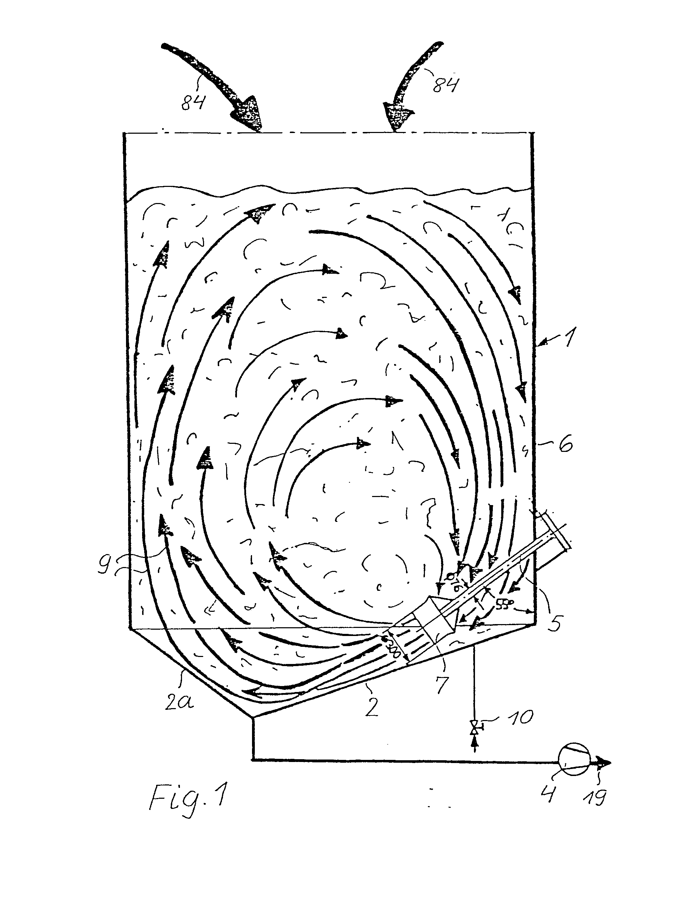

In den nachfolgenden Figuren 1–5 sind mit dikken Strichen Produktleitungen dargestellt, mit dünnen Strichen Leitungen für Wasser und Reinigungsmittel, mit unterbrochenen Strichen Leitungen für Dampf und Kondensat, mit durch Punkte zusätzlich markierte dünne Striche Leitungen für Luft und Vakuumbrüden und durch mit dünnen Querstrichen gekennzeichnete Linien elektrische Leitungen.

In Figur 1 ist mit 1 ein Ausmischtank bezeichnet, der Bestandteil einer Anlage zur Herstellung eines Orangensaftes ist. Der Ausmischtank weist einen asymmetrischen Boden mit einem relativ flachen Abschnitt 2 und einem relativ steilen Abschnitt 2a auf. Von der tiefsten Stelle des Bodens zwischen den Abschnitten 2, 2a geht eine Produktablaufleitung 3 aus, die zu einer Kreiselpumpe 4 mit Freistromlaufrad führt. Die Pumpe wird mit gegenüber der Nenndrehzahl reduzierter Drehzahl betrieben.

Benachbart zu dem flacheren Abschnitt 2 des Bodens ist ein als Leitstrahlmischer ausgebildeter Rührer 5 angeordnet, der in einem Winkel von 55° zu einer lotrechten Wand des Ausmischtanks ausgerichtet ist.

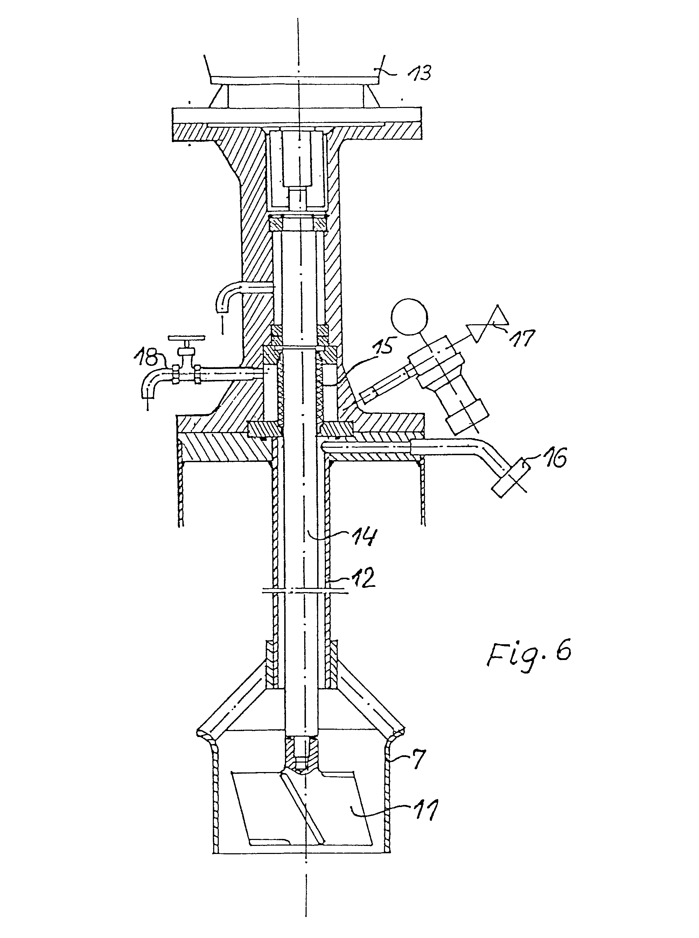

Der als Leitstrahlmischer ausgebildete Rührer hat einen schlitzlosen Statorkorb 7 mit einem Aussendurchmesser von vorzugsweise 300 mm, der durch ein Statorrohr 8 mit einem Aussendurchmesser von vorzugsweise 76 mm in der lotrechten Wand 6 gehalten wird. Weitere Einzelheiten des Leitstrahlmischers werden nachfolgend anhand von Figur 6 besprochen.

Der Leitstrahlmischer bzw. Rührer 5 ist insgesamt so ausgebildet und in dem Ausmischtank angeordnet, dass er die mit den Pfeilen 9 gekennzeichnete Strömung des Produkts erzeugt, wobei das ausgemischte Produkt auch bei sinkendem Flüssigkeitsspiegel zwar intensiv bewegt wird, eine Strudelbildung und Lufteinschlag jedoch vermieden werden. Der Mischer ist durch nicht dargestellte Mittel niveaugesteuert, so dass bei Unterschreiten eines bestimmten Mindestniveaus des Produkts in dem Mischtank der Rührer abgeschaltet wird. Die ohne Lufteinschlag nicht mehr bewegbare Restmenge in dem Ausmischtank ist so klein, dass sie in wenigen Minuten abgefüllt werden kann.

In den Boden des Ausmischtanks mündet noch eine Leitung mit einem Ventil 10, durch welches Warmwasser für das auszumischende Produkt vorgelegt werden kann.

Einzelheiten des Leitstrahlmischers, dessen Rührwerkzeuge so ausgebildet sind, dass sie keine Verletzung, Zerstückelung oder Verkürzung des Fruchtfleisches in dem auszumischenden Produkt hervorrufen, gehen aus Figur 6 hervor:

Hieraus ist ersichtlich, wie als Mischwerkzeuge ein Rotor 11 in dem schlitzlosen Stator 7 drehbar ist, der an einem Statorrohr 12 angeschweisst ist. Eine den Rotor 11 mit einem Stirnradgetriebemotor 13 verbindende Welle 14 ist durch eine mit Sperrwasser beaufschlagte doppelt wirkende Gleitringdichtung 15 abgedichtet. Erkennbar ist in Figur 6 noch ein Anschlussstutzen 16 einer Reinigungs- und Dosiervorrichtung, durch den der Welle und dem Rotor sowie dem Stator Reinigungsflüssigkeit zur Reinigung während des Betriebs des Freistrahlmischers zugeführt werden kann. – Ein Magnetventil am Sperrwassereingang ist mit 17 bezeichnet, während ein Nadelventil am Sperrwasserausgang die Bezeichnung 18 trägt.

Aus dem Ausmischtank 1 wird das Produkt über die Kreiselpumpe 4, Leitung 19 und einem Schwimmerschliessventil 22 einem Vorlaufgefäss 20 zugeführt. In dem Vorlaufgefäss ist ebenfalls ein niveaugesteuert geschwindigkeitsumsteuerbarer Rührer 21 vorgesehen, der als Leitstrahlmischer ausgebildet ist. Der Rührer ist derart in Abhängigkeit von dem Füllstand gesteuert, dass ein Lufteinschlag vermieden wird. In jedem Fall wird das Produkt in dem Vorlaufgefäss in Suspension gehalten. In das Vorlaufgefäss reichen ein Schwimmerschliessventil 22 zur Füllstandsregulierung und eine Minimum-Maximumniveausonde 23 hinein. Diese Sonden dienen in noch zu beschreibender Weise dazu, das Produkt in einem geschlossenen Produktkreislauf in das Vorlaufgefäss zurückzuführen, wenn das Produktniveau auf ein Minimum absinkt und das Produkt erst wieder einem Unterdruck-Entgaser, nur bei Hochtemperatur-Entgasung, und einer Abfülleinrichtung zuzuführen, wenn das Maximum des Produktniveaus in dem Vorlaufgefäss erreicht ist.

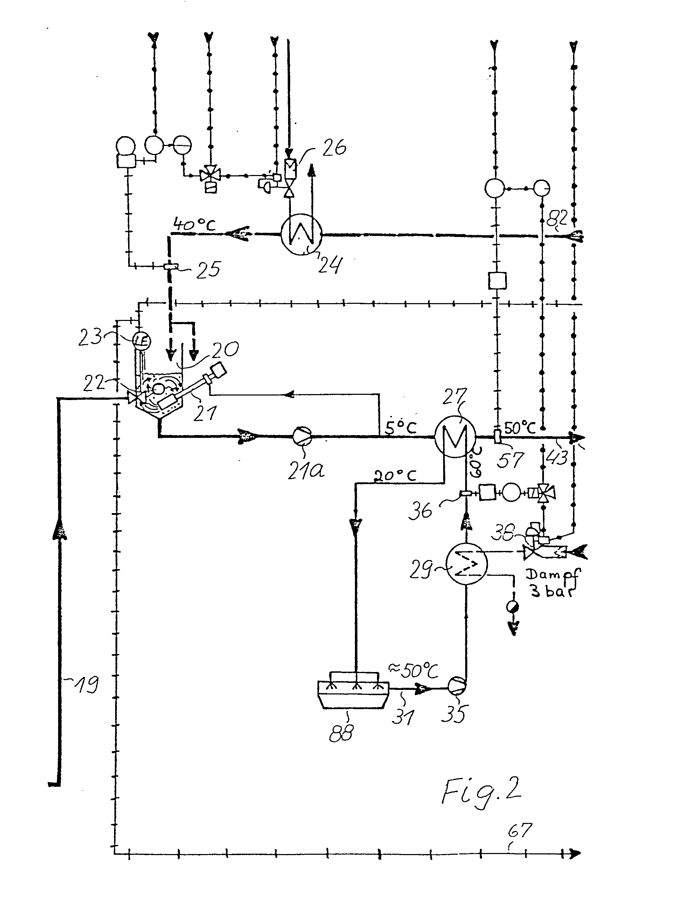

In Figur 2 ist ein das Produkt kühlender Wärmetauscher mit 24 bezeichnet, der das gegebenenfalls im Kreislauf in das Vorlaufgefäss zurückgeleitete Produkt durch einen Temperaturfühler 25 und ein pneum. Regelventil 26 gesteuert auf eine Temperatur kleiner als 40° einregelt.

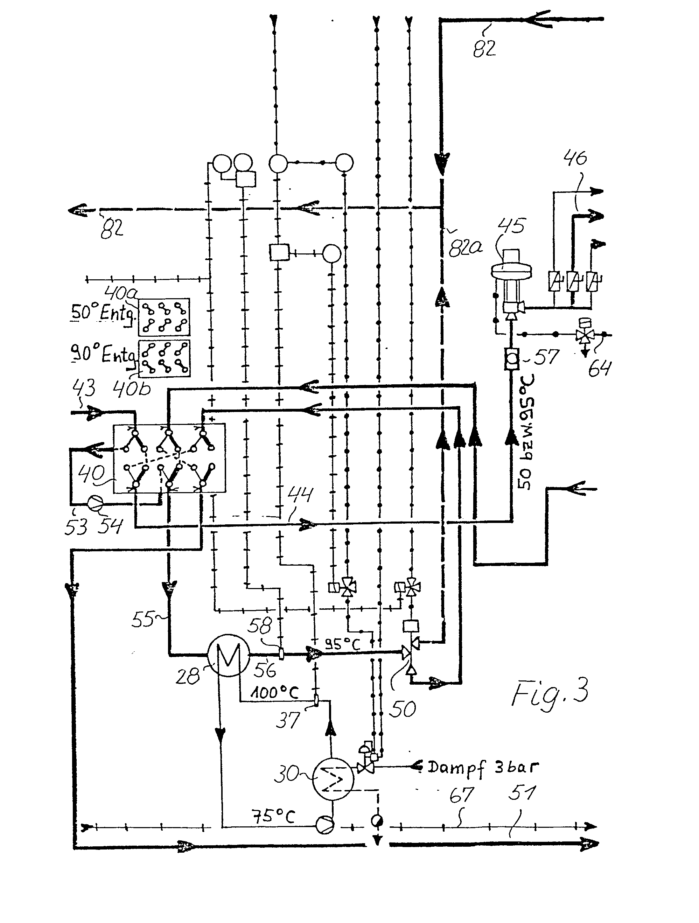

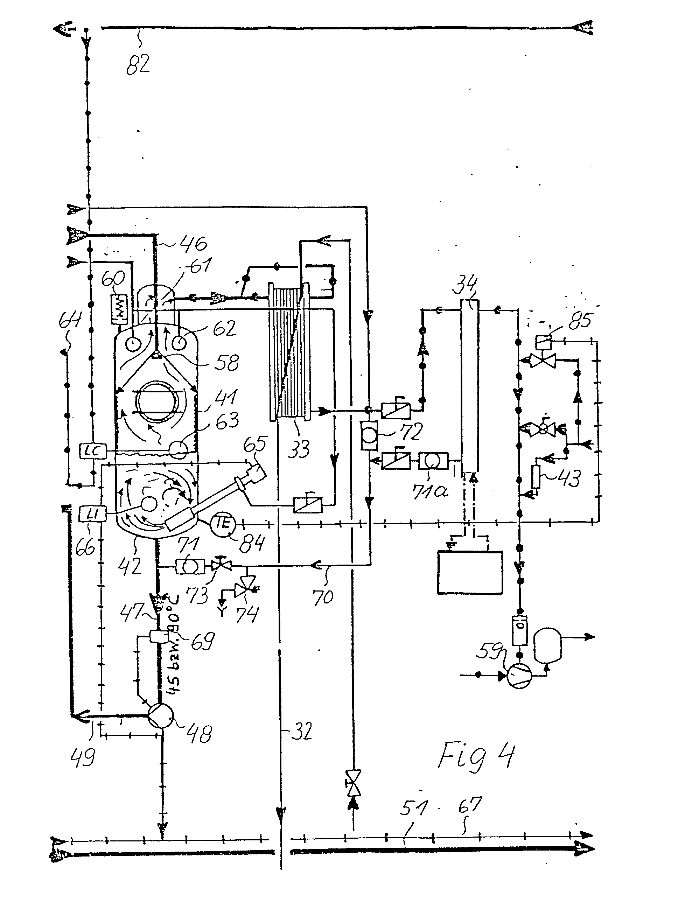

Zu einem zweistufigen Doppelrohrwärmetauscher, der als wesentlicher Bestandteil einer Pasteurisationsanlage vorgesehen ist, gehören die erste Stufe 27 in Figur 2 und die zweite Stufe 28 in Figur 3. Zu jeder Stufe des Doppelrohrwärmetauschers gehört ein dampfbeheizter Gegenstromapparat 29 bzw. 30. In die durch den Gegenstromapparat 29 geführte Leitung 31 mündet ferner eine Kühlwasserleitung 32, die von einer ersten Stufe 33 einer zweistufigen Kondensationseinrichtung mit den Stufen 33 und 34 in Figur 4 abgeht. Die zweite Stufe der Kondensationseinrichtung ist mit 34 bezeichnet. Die Kühlwasserleitung 32 mündet in die Leitung 31 in Figur 2 vor einer Rekuperationspumpe 35. Damit wird ein Teil der Kondensationswärme wiedergewonnen und in der ersten Stufe des Doppelrohrwärmetauschers genutzt. Auf die gleiche Weise wird das im Pakkungsrückkühler 88 anfallende ca. 50°ige Wasser im Gegenstromapparat 29 regenerativ genutzt.

Beide Stufen 27 und 28 des Doppelrohrwärmetauschers sind mit Temperaturüberwachungseinrichtungen mit jeweils einem Temperaturfühler 36 bzw. 37 und einem Ventil 38 bzw. 39 ausgerüstet, mit der die Temperatur in dem Sekundärkreislauf der jeweiligen Stufe des Doppelrohrwärmeaustauschers durch Regelung der Dampfzufuhr zu dem zugehörigen Gegenstromapparat 29 bzw. 30 begrenzt wird.

Während die erste Stufe des Doppelrohrwärmetauschers 27 stets einem Unterdruck-Entgaser – auch Vakuum-Entgaser genannt – vorgeschaltet ist, kann die zweite Stufe 28 mittels Schwenkbögen 40 in Reihe zu der ersten Stufe dem Unterdruck-Entgaser 41 in Figur 4 vorgeschaltet werden oder aber dem Bodenende 42 des Unterdruck-Entgaser nachgeschaltet werden.

Damit kann die Entgasung in dem Unterdruck-Entgaser in Abhängigkeit von dem Produkt entweder bei 50–60°C erfolgen, wenn die zweite Stufe des Doppelrohrwärmeaustauschers diesem nachgeschaltet ist, oder aber bei etwa 95°C stattfinden, wenn die zweite Stufe 28 des Doppelrohrwärmetauschers dem Unterdruck-Entgaser vorgeschaltet ist. Die Entgasung bei 95°C erfolgt vorzugsweise bei fruchtfleischhaltigen Produkten und hängt von dem gelösten Gasgehalt in dem ausgemischten Produkt ab. Nicht fruchtfleischhaltige Produkte werden dagegen vorzugsweise bei 50–60°C entgast.

In Figur 3 sind bei 40a die Stellungen der Schwenkbögen zu einer Entgasung des Produkts in dem Unterdruck-Entgaser 41 bei etwa 50°C dargestellt, während die Stellung der Schwenkbögen bei 40b eine Entgasung bei etwa 90–95°C ermöglicht:

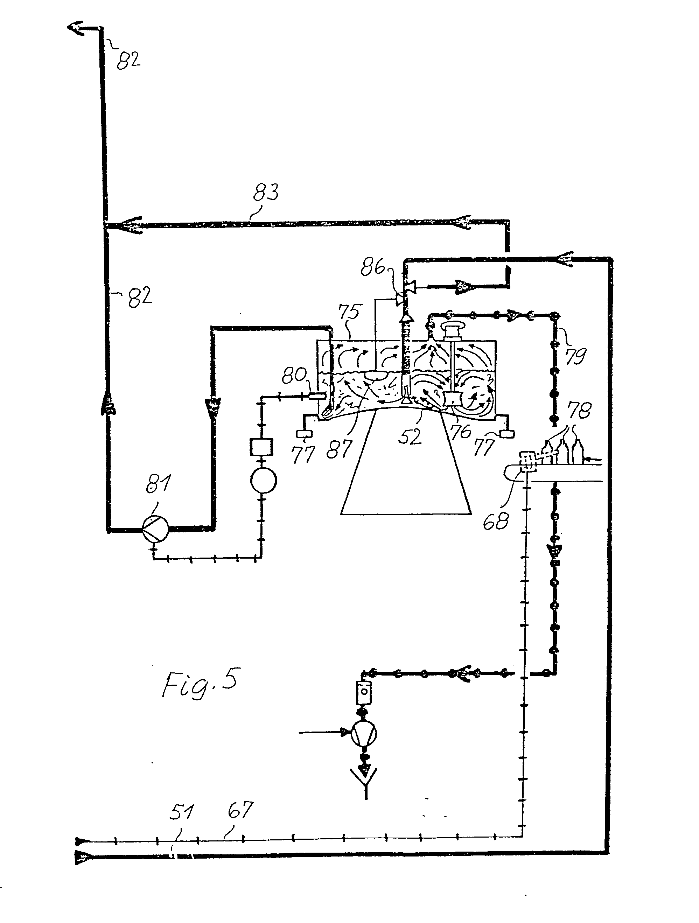

In der erstgenannten Stellung der Schwenkbögen strömt das Produkt über eine Leitung 43, einen Leitungsabschnitt 44 und ein Regelventil 45 zur Durchflussregelung bzw. Füllstandregelung in dem Unterdruck-Entgaser 41 über eine Leitung 46 in das Kopfende des Unterdruck-Entgasers. Eine Produktablaufleitung 47 führt über eine Absaugpumpe 48, über eine Leitung 49 und Schwenkbögen zu der zweiten Stufe 28 des Doppelrohrwärmetauschers. Von dem Ausgang der zweiten Stufe 28 wird das pasteurisierte Produkt über ein Mehrwegeventil 50 normalerweise wiederum über Schwenkbögen in eine Leitung 51 zu einer Fülleinrichtung 52 geführt, siehe Figur 5.

In der 90°-Stellung der Schwenkbögen fliesst das Produkt hingegen aus der ersten Stufe des Doppelrohrwärmetauschers über die Leitung 43, einen Leitungsabschnitt 53, eine Kreiselpumpe 54 mit Zweikanallaufrad, über einen Leitungsabschnitt 55 in die zweite Stufe des Doppelrohrwärmeaustauschers und von dieser wiederum zu dem Mehrwegeventil 50 und die Leitung 46 am Kopfende des Unterdruck-Entgasers. In diesem Fall wird die Leitung 49, die sich an die Produktablaufleitung 47 anschliesst, über Schwenkbögen direkt an die Leitung 51 zu der Fülleinrichtung 52 angeschlossen.

In Produktflussrichtung nach den Stufen 27 und 28 des Doppelrohrwärmetauschers sind jeweils in den Leitungen 43 und 56 zur Temperaturüberwachung des zu erwärmenden bzw. pasteurisierenden Produkts Temperaturfühler 57 bzw. 58 angeordnet, die ebenfalls mit den Ventilen 38 bzw. 39 zur Regulierung der Dampfzufuhr über nicht bezeichnete Temperaturregler in Verbindung stehen.

In Figur 3 ist schliesslich ein in dem Leitungsabschnitt 44 ein Schauglas 57 zur Beobachtung der Produktzufuhr bzw. Beobachtung von Reinigungsflüssigkeit dargestellt. Der in Figur 4 dargestellte Unterdruck-Entgaser 41 ist als Hochtemperaturentgaser ausgebildet. Er weist eine 45°-Kegeleinlaufdüse 58 auf, welche das einfliessende Produkt in einer dünnen Schicht gleichbleibender Filmdicke und Sprühradius versprüht. Der Unterdruck wird mit einer Vakuumpumpe 59 erzeugt. Die Vakuumpumpe steht mit dem Kopf des Unterdruck-Vergasers über die zweistufige Kondensationseinrichtung 33, 34 in Verbindung. Der Unterdruck in dem Unterdruck-Entgaser wird durch ein Unterdruckhalteventil 43 eingestellt und unabhängig von der Produkttemperatur aufrechterhalten.

Weiterhin sind in den Unterdruck-Entgaser zwei Reinigungssprühkugeln 61 und 62 eingebaut, die eine Reinigung im Durchlaufverfahren gestatten. Mit einem Niveaugeber 63 wird über eine Steuerleitung 64, die auf das Regelventil 45 einwirkt, der Füllstand in dem Unterdruck-Entgaser geregelt. Damit kann für das Produkt eine produktspezifische zur Pasteurisierung notwendige Heisshaltezeit und eine optimale Entgasungszeit eingehalten werden.

Weiterhin ist in den Unterdruck-Entgaser ein als Leitstrahlmischer ausgebildeter Rührer 65 eingebaut, der durch einen weiteren Füllstandsgeber 66 abgeschaltet wird, wenn der Füllstand eine vorgegebene Höhe unterschreitet. Dadurch wird trotz ausreichender in Suspension-Haltung von Fruchtteilen in dem Unterdruck-Entgaser vermieden, dass Gas in das Produkt eingeschlagen wird und dass die Fruchtteilchen beeinträchtigt, insbesondere verkleinert werden.

In Abhängigkeit von dem niedrigsten Füllstand in dem Unterdruck-Entgaser wird ferner durch den Füllstandsgeber 66 über eine Steuerleitung 67 gesteuert, ein Verpackungseinlaufstopper 68 in Figur 5 gestoppt.

Durch eine Rohrsonde 69 in der Produktablaufleitung 47 wird bei annähernd vollständiger Entleerung des Unterdruck-Entgasers die Absaugpumpe 48 unverzögert abgeschaltet, wodurch ein Trockenlauf der Pumpe und ein Gaseinschlag in das Rohrleitungssystem vermieden werden. Gleichzeitig gelangt auch hier ein Steuerimpuls über die Steuerleitung 67 zu dem Verpackungseinlaufstopper 68, um nur noch die in der Fülleinrichtung 52 befindlichen Verpackungen leerzufahren.

Die mit dem Kopfende des Unterdruck-Entgasers verbundene zweistufige Kondensationseinrichtung 33, 34 steht über eine Sammelleitung 70 und ein Schauglas 71 injektormässig mit der Produktablaufleitung 47 in Verbindung. Hierdurch kann das aus den Brüdendämpfen gewonnene Aroma wieder dem entgasten Produkt dosiert zugeführt werden. Zur Dosierung und Kontrolle des Flüssigaromas dienen weiterhin Schaugläser 71a und 72 sowie Regulierventile, z.B. 73 und ein Probeentnahmehahn 74.

In Figur 5 ist dargestellt, wie eine nach dem Niedervakuumprinzip arbeitende Abfülleinrichtung ausgebildet und angeordnet ist. Die Abfülleinrichtung weist einen Füllerkessel 75 auf, in dem wiederum ein niveaugesteuerter Rührer 76 angeordnet ist. Die aussenliegenden Füllventile der Abfülleinrichtung sind mit 77 bezeichnet, sie können mit den Verpackungen bzw. Behältern 78 in Eingriff gebracht werden. Mit den Füllventilen ist eine reibungslose Füllung des stark feststoffhaltigen Produktes möglich.

Der Rührer 76, der vorzugsweise ebenfalls in seiner Geschwindigkeit in Abhängigkeit von dem Niveau gesteuert wird, verhindert Entmischungen des Produkts in dem Füllerkessel, obwohl dessen Inhalt im Verhältnis zur Füllerleistung klein dimensioniert ist, insbesondere 1:120.

Durch eine Brüdenleitung 79 erfolgt vorzugsweise eine weitere Entgasung des Produkts in dem Füllerkessel. Brüdenleitung 79 ist mit der Vakuumpumpe 89 verbunden.

Ein Minimum-Maximum-Thermofühler 80 betätigt über einen Regler eine Rückspeisepumpe 81, wenn die Temperatur des entgasten Produkts einen Mindestwert unterschreitet, wodurch die Verpackungen nicht mehr sicher desinfiziert werden könnten. In diesem Fall pumpt die Rückspeisepumpe das entgaste Produkt mit verminderter Leistung über eine Leitung 82 über den kühlenden Doppelrohrwärmetauscher 24 in das Vorlaufgefäss 20 zurück, damit das Produkt einen neuen Durchlauf durch die Stufen des Doppelrohrwärmetauschers der Pasteurisierungsanlage und den Unterdruck-Entgaser durchlaufen kann. Die Zufuhr des entgasten Produkts zu der Abfülleinrichtung erfolgt dabei mit vermindertem Durchfluss, wobei die überschüssige Produktmenge ebenfalls über eine Leitung 83 und die Leitung 82 in das Verlaufgefäss zurückgeführt wird. Diese Vorgänge werden unterbrochen und der Füllkessel wird in normaler Weise und mit voller Zuflussleistung an das entgastem Produkt geführt, wenn eine eingestellte höhere Temperatur vom Minimum-Maximum-Temperaturfühler erfasst wird.

Als Rohstoffe für die Orangensaftherstellung mit der Anordnung nach den Figuren 1–5 dienen tiefgekühlt bei −18° bis −20°C angeliefertes Orangensaftkonzentrat, tiefgefrorene langfasrige Fruchtpulpe und Orangensaftaroma sowie Wasser. Die genannten Komponenten werden mit Ausnahme des Wassers, wie mit den Pfeilen 84 angedeutet, in den Ausmischtank eingebracht, nachdem sie durch Lagerung bei Raumtemperatur soweit angetaut sind, dass eine Gebindeentleerung in den Ausmischtank 1 möglich ist. Durch das Ventil 10 wird Warmwasser von 60–90°C in dem Ausmischtank in Abhängigkeit von der Fruchtpulpemenge und -temperatur vorgelegt. Die Wassertemperatur wird so gewählt, dass nach Auflösen der Bestandteile und Einstellen auf den gewünschten Extraktgehalt eine Mischungstemperatur von ca. 10°C erreicht wird. In dem Ausmischtank werden die Bestandteile des Orangensafts unter Vermeidung von Luftein-schlüssen und Beeinträchtigungen, insbesonde-re Kürzungen der langfaserigen Fruchtpulpe homogen gemischt.

Das gemischte Produkt wird über die Kreiselpumpe 4 dem Vorlaufgefäss zugeführt und von dort in die erste Stufe 27 des zweistufigen Dop-pelrohrwärmetauschers gefördert. Eine Entmi-schung in diesem Vorlaufgefäss wird durch den Rührer 21 ausgeschlossen, wobei ebenfalls keine Verletzung der Fruchtpulpe eintritt.

Das Mischprodukt wird durch eine Kreiselpumpe 21a bei beiden möglichen Einstellungen der Schwenkbögen 40a und 40b der ersten Stufe des Doppelrohrwärmetauschers zugeführt. Je nach der Einstellung der Schwenkbögen, die voranstehend beschrieben wurde, gelangt das auf ca. 50°C vorgewärmte Produkt unmittelbar, d.h. ohne weitere Erhitzung zur Entgasung in den Unterdruck-Entgaser 41 und von diesem in die zweite Stufe 28 des Doppelrohrwärmetauschers zur Pasteurisierung. Bei der anderen Einstellung der Schwenkbögen gemäss 40b sind hingegen beide Stufen des Doppelrohrwärmetauschers hintereinandergeschaltet, so dass das Produkt bereits auf 90–95°C erwärmt in den Unterdruck-Entgaser eingepumpt wird. In dem Unterdruck-Entgaser erfolgt eine weitere Pasteurisierung während der Heisshaltezeit, bis das entgaste Produkt aus dem Bodenende 82 durch die Produktablaufleitung 47 abfliesst.

Die Produktentgasung erfolgt in dem Unterdruck-Entgaser etwas unterhalb des Siedepunktes bei 500–600 mbar (90–95°C) bzw. 120–200 mbar (50–60°C).

Um die bei der Entgasung entweichenden Aromastoffe nicht dem Produkt endgültig zu entziehen, ist der Vakuumpumpe 59 die zweistufige Kondensationseinrichtung mit den Stufen 33 und 34 vorgeschaltet, die mit Frischwasser – Stufe 33 – und Kältemittel – Stufe 34 – beaufschlagt wird. Das zurückgewonnene aromatische Kondensat wird über die Leitung 70 in die Abflussleitung in-jektormässig eingespeist. Eine homogene Durch-mischung des dem Unterdruck-Entgaser entnommenen Produkts wird auch hier durch den Rührer 65 gewährleistet.

Durch die Absaugpumpe 48 wird das entweder bereits füllfertige heisse Produkt zu der Fülleinrichtung 52 gefördert oder aber vor der Förderung zu der Fülleinrichtung erst in die zweite Stufe 28 des Doppelrohrwärmetauschers eingeleitet, hierin pasteurisiert und dann zur Abfülleinrichtung gepumpt.

Auch in der Abfülleinrichtung wird eine Entmischung des Produktes durch einen Rührer vermieden, ohne dass dieser die Produktqualität durch Beeinträchtigung des Fruchtfleisches oder Einschlag von Gas oder Wasser vermindert.

In der dargestellten Anlage ist mehrfach dafür gesorgt, dass einerseits keine thermische Überlastung des Produkts in den verschiedenen Verfahrensstufen eintritt, dass aber andererseits eine sichere Pasteurisierung – auch der zu füllenden Behälter oder Packungen – gewährleistet ist. Zur Vermeidung von Übertemperaturen werden die Sekundärkreisläufe der Stufen 27 und 28 des Doppelrohrwärmetauschers entsprechend gesteuert. Bei zu niedriger Temperatur, insbesondere des Produkts in der Pasteurisier- und Abfülleinrichtung, wird das Produkt über den kühlenden Doppelrohrwärmetauscher, der das Produkt auf unter 40°C abkühlt, wieder in das Vorlaufgefäss zurückgeführt, wie im einzelnen voranstehend beschrieben.

Wie ebenfalls voranstehend dargestellt wurde, können mit der besprochenen Anlage die Verfah-rensparameter des Herstellungsverfahrens flexi-bel variiert werden, wodurch sich die dargestellte Anlage allgemein zur Herstellung von Fruchtsäf-ten, Nektaren und Fruchtsaftgetränken, bei-spielsweise aus den bekannten Citrusfrüchten eignet. Ferner lassen sich Mischfruchtsäfte, Mischfruchtnektare und Mischfruchtsaftgetränke herstellen, deren Saftanteil nicht nur aus Citrussaftanteil besteht.

**Patentansprüche**

1. Verfahren zur Herstellung von Citrusfruchtsäften und Getränken auf der Grundlage von Citrusfrüchten mit Fruchtfleisch aus dem essbaren Anteil der Früchte, bei dem das Produkt entgast wird, dadurch gekennzeichnet, dass man ein Ausgangsmaterial, das Fruchtsaft, Fruchtfleischfasern und Vesikel enthält, ohne Einschlagen von Luft und ohne wesentliche Verletzung, Zerstückelung oder Verkürzung des Fruchtfleisches homogen durchmischt und das Produkt während weiterer Verfahrensschritte noch mit so hoher Geschwindigkeit rührt, dass die Fruchtfleischfasern und Vesikel in Suspension gehalten werden.

2. Verfahren nach Anspruch 1, dadurch gekennzeichnet, dass man das Ausgangsmaterial durch Verdünnen von Fruchtsaftkonzentrat und langfaserigem Fruchtfleisch sowie gegebenenfalls Fruchtsaftaromen mit Wasser herstellt.

3. Verfahren nach Anspruch 1 oder 2 mit anschliessender Pasteurisierung und Heissabfüllung, dadurch gekennzeichnet, dass man das homogen vermischte Produkt vor dem Entgaser entweder erst auf ca. 50–60°C erhitzt, dann unter Vakuum entgast und dann pasteurisiert und anschliessend heiss abfüllt.

4. Verfahren nach Anspruch 1 oder 2 mit anschliessender Pasteurisierung und Heissabfüllung, dadurch gekennzeichnet, dass man das homogen vermischte Produkt erst pasteurisiert, dann bei Pasteurisationstemperatur (90–95°C) entgast und dann heiss abfüllt.

5. Verfahren nach einem der Ansprüche 1–4, dadurch gekennzeichnet, dass man das bei der Entgasung entweichende, Aromastoffe enthaltende dampfförmige Gemisch zweistufig kondensiert und das zurückgewonnene aromatische Kondensat kontinuierlich und in quantitativ äquivalenter Menge wieder in den entgasten Produktstrom einspeist.

6. Verfahren nach einem der Ansprüche 1–5, dadurch gekennzeichnet, dass man das Produkt während des Pasteurisierens, Entgasens und Abfüllens mit einer so hohen Geschwindigkeit rührt, dass zwar kein Einschlagen von Luft und keine Verletzung, Zerstückelung oder Verkürzung des Fruchtfleisches eintreten, andererseits aber das Produkt homogen vermischt bleibt.

7. Anordnung zur Durchführung des Verfahrens nach Anspruch 1, gekennzeichnet durch einen Ausmischtank (1) mit mindestens einem Rührer (5) mit niveaugesteuerter Mischgeschwindigkeit, dessen Rührwerkzeuge mit einem schlitzlosen Stator (7) ausgebildet und mit einem Einbauwinkel in der Nähe eines Bodens (2, 2a) des Ausmischtanks in diesem angeordnet sind, sowie einen mit dem Ausmischtank (1) in Verbindung stehenden Entgaser (41).

8. Anordnung nach Anspruch 7, dadurch gekennzeichnet, dass zwischen dem Ausmischtank (1) und dem Entgaser (41) ein Doppelrohrwärmetauscher (27, 28) mit vorgeschaltetem Vorlaufgefäss (20) angeordnet ist.

9. Anordnung nach Anspruch 8, dadurch gekennzeichnet, dass der Doppelrohrwärmeaustauscher (27, 28) zweistufig ausgebildet ist.

10. Anordnung nach Anspruch 8 oder 9, dadurch gekennzeichnet, dass zur Wärmerückgewinnung ein zur Behälter- bzw. Packungsrückkühlung vorgesehener Rückkühler über eine Rekuperationspumpe und einen dampfbeheizten Gegenstromapparat mit dem Doppelrohrwärmeaustauscher in Verbindung steht.

11. Anordnung nach Anspruch 9 oder 10, dadurch gekennzeichnet, dass eine Abfülleinrichtung (52) wahlweise mit dem Bodenende (42) des Entgasers (41) bei Hochtemperatur-Entgasung oder mit dem Auslauf des Doppelrohrerhitzers (2. Stufe 28) für die Pasteurisation bei Entgasung unter niedriger Temperatur in Verbindung steht.

12. Anordnung nach einem der Ansprüche 7–11, gekennzeichnet durch eine mit einem Kopfende des Entgasers (41) verbundene zweistufige Kondensationseinrichtung (33, 34), deren Kondensatauslass über eine Sammelleitung (70) mit einer Produktabführleitung (47) für die Produktableitung aus dem Entgaser (41) injektormässig verbunden ist.

13. Anordnung nach einem der Ansprüche 7–12, dadurch gekennzeichnet, dass in dem Unterdruck-Entgaser (41) ein niveaugesteuerter Rührer (65) angeordnet ist, der bei Produktmangel im Entgaser abschaltbar ist.

14. Anordnung nach einem der Ansprüche 7–13, dadurch gekennzeichnet, dass der Entgaser (41) mit einer Übertemperatursicherung mit einem Thermostaten (84) und einem Magnetventil (85) versehen ist, die bei einer Überschreitung einer Maximaltemperatur des aus dem Entgaser ablaufenden entgasten Produkts unter Atmosphären-Druck stehende Luft in den Entgaser einschnorchelt.

15. Anordnung nach einem der Ansprüche 7–14, dadurch gekennzeichnet, dass der Entgaser (41) mit einem Unterdruckhalteventil (43) versehen ist.

16. Anordnung nach einem der Ansprüche 7–15, dadurch gekennzeichnet, dass der Entgaser (41) mit einem Überdruckventil (60) für Überdrucksterilisation und mit eingebauten Reinigungssprühkugeln (61, 62) versehen ist.

17. Anordnung nach einem der Ansprüche 7–16, dadurch gekennzeichnet, dass in eine Produkt-Ablaufleitung (47) des Entgasers eine Rohrsonde (69) eingebaut ist, die bei totaler Entleerung des Entgasers eine Absaugpumpe (48) unverzögert abschaltet.

18. Anordnung nach einem der Ansprüche 7–17 mit einem vor dem Einlass des Entgasers angeordneten, den Füllstand in dem Entgaser regelnden Regelventil, dadurch gekennzeichnet, dass das Regelventil (45) zusätzlich durch Handsteuerung (64) betätigbar ist.

19. Anordnung nach einem der Ansprüche 7–18, dadurch gekennzeichnet, dass in den von der Kondensationseinrichtung (33, 34) abgehenden Aromakondensatleitungen (70) Durchfluss-Schaugläser (71, 71a, 72) und Regulier- und Probeentnahmehähne (73, 74) angeordnet sind, durch die Flüssigaroma entnehmbar ist.

20. Anordnung nach einem der Ansprüche 7–19, dadurch gekennzeichnet, dass in dem Vorlaufgefäss (20) ein niveaugesteuerter geschwindigkeitsumsteuerbarer Rührer (21) vorgesehen ist.

21. Anordnung nach einem der Ansprüche 7–20, dadurch gekennzeichnet, dass durch eine Minimum-Niveausonde (23) im Vorlaufgefäss ein Umschaltventil (50), das hinter dem für die Pasteurisation vorgesehenen Doppelrohrwärmetauscher (2. Stufe 28) angeordnet ist, auf Produktkreislauf zurück in das Vorlaufgefäss (20) umschaltbar ist.

22. Anordnung nach einem der Ansprüche 7–21, dadurch gekennzeichnet, dass in der Abfülleinrichtung (52) ein niveaugesteuerter Rührer (76) vorgesehen ist.

23. Anordnung nach einem der Ansprüche 7–22, dadurch gekennzeichnet, dass als Leitstrahlmischer ausgebildete Rührer (21, 65, 76) in dem Vorlaufgefäss (20) der Pasteurisationsanlage, dem Entgaser (41) und der Abfülleinrichtung (52) angeordnet sind.

24. Anordnung nach einem der Ansprüche 7–23, dadurch gekennzeichnet, dass der Entgaser (41) so dimensioniert ist, dass bei Hochtemperatur-Entgasung (90–95°C) eine Produktverweildauer (Durchlaufzeit) von 30–120 Sekunden erzielt wird.

25. Anordnung nach einem der Ansprüche 7–24, dadurch gekennzeichnet, dass in Produktflussrichtung unmittelbar vor der Abfülleinrichtung (52) ein Mehrwegeventil (86) durch einen Schwimmer (87) in der Abfülleinrichtung so umschaltbar ist, dass die Produktablaufleitung (47) des Unterdruck-Entgasers (41) unter Umgehung der Abfülleinrichtung (52) über eine Umgehungsleitung (83, 82) an den in Rückflussrichtung vor dem Vorlaufgefäss (20) angeordneten Doppelrohrwärmetauscher (24) anschliessbar ist.

26. Anordnung nach einem der Ansprüche 7–25, dadurch gekennzeichnet, dass Temperatursteuerungseinrichtungen für das in den Doppelrohrwärmetauschern aufzuheizende Produkt mit zusätzlichen Übertemperaturabsicherungen (36, 37) im jeweiligen Heisswasserkreislauf ausgerüstet sind.

27. Anordnung nach einem der Ansprüche 7–26, dadurch gekennzeichnet, dass der Entgaser (41) mit einer federdruckregulierten 45°-Kegeleinlaufdüse (58) für 360°-Radius-Rundum-Versprühung ausgerüstet ist.

28. Anordnung nach einem der Ansprüche 7–27, dadurch gekennzeichnet, dass die Abfülleinrichtung (52) einen eingebauten Minimum-Maximum-Thermofühler (80) mit Einstellskala aufweist, der mit einer Rückspeisepumpe gekoppelt ist und dass ein Füllerkessel über die Rückspeisepumpe (81), Leitungen (82) sowie den kühlenden Doppelrohrwärmetauscher (24) mit dem Vorlaufgefäss (20) in Verbindung steht.

29. Anordnung nach einem der Ansprüche 7–28, dadurch gekennzeichnet, dass bei Untertemperatur unter die an Thermostat (an 58) in der Produktablaufleitung eingestellte Pasteurisationstemperatur das Umschaltventil (50) auf Produktkreislauf über den kühlenden Doppelrohrwärmetauscher (24) zurück ins Vorlaufgefäss schaltbar ist.

30. Anordnung nach einem der Ansprüche 7–29, dadurch gekennzeichnet, dass die Fördereinrichtungen Kreiselpumpen (4, 21a, 48, 54) oder selbstansaugende Kreiskolbenpumpen (81) sind.

**Claims**

1. Process for producing citrus juices and beverages based on citrus juices with fruit pulp from the edible parts of fruits, wherein the product is degasified, characterised in that a raw material containing fruit juice, fruit pulp fibres and vesicles is thoroughly mixed homogeneously without beating-in air and without substantially injuring, dismembering or shortening the fruit pulp, and during further process steps the product is still agitated at such a high speed that the fruit pulp fibres and vesicles are kept in suspension.

2. Process according to claim 1, characterised in that the raw material is produced by diluting fruit juice concentrate and long-fibre fruit pulp, and also fruit juice flavour substances if appropriate, with water.

3. Process according to claim 1 or 2 with subsequent pasteurisation and hot filling, characterised in that the homogeneously mixed product upstream of the degasifier may be heated first to approximately 50–60°C, then degasified under a vacuum, and then pasteurised and subsequently filled in the hot state.

4. Process according to claim 1 or 2 with subsequent pasteurisation and hot filling, characterised in that the homogeneously mixed product is first pasteurised, then degasified at pasteurisation temperature (90–95°C) and then hot filled.

5. Process according to one of claims 1–4, characterised in that the mixture in vapour form containing flavour substances which evolves in degasification is subjected to two-stage condensation, and the recovered aromatic condensate is fed again continuously and in quantitatively equivalent amount into the degasified product flow.

6. Process according to one of claims 1–5, characterised in that the product is agitated at such a high speed during the pasteurisation. Degasification and filling that although there is no beating-in of air and no injuring of, dismembering of or shortening of the fruit pulp, on the other hand the product remains homogeneously mixed.

7. Arrangement for carrying out the process according to claim 1, characterised by a blending or thorough mixing tank (1) with at least one agitator (5) with levelcontrolled mixing speed, whose agitating tools are constructed with a slotless stator (7) and arranged at an angle in the vicinity of a bottom (2, 2a) of the mixing tank in this tank, and also by a degasifier (41) which is connected to the mixing tank (1).

8. Arrangement according to claim 7, characterised in that between the mixing tank (1) and the degasifier (41) there is arranged a double-tube heat exchanger (27, 28) with preceding preliminary vessel (20).

9. Arrangement according to claim 8, characterised in that the double-tube heat exchanger (27, 28) is of twostage construction.

10. Arrangement according to claim 8 or 9, characterised in that for heat recovery purposes a cooling apparatus provided for the cooling of containers or packs is connected via a recuperation pump and a steam-heated counter-current flow apparatus with the double-tube heat exchanger.

11. Arrangement according to claim 9 or 10, characterised in that a filling apparatus (52) is connected selectively to the bottom end (42) of the degasifier (41) in the case of high-temperature degasification, or to the outlet of the double-tube heater (2nd stage 28) for the pasteurisation in the case of degasification at low temperature.

12. Arrangement according to one of claims 7–11, characterised by a two-stage condensation apparatus (33, 34) which is connected to a head end of the degasifier (41) and whose condensate outlet is connected via a collecting conduit (70), with an injector type of connection, to a product discharge conduit (47) for the removal of product from the degasifier (41).

13. Arrangement according to one of claims 7–12, characterised in that in the negative-pressure degasifier (41) there is arranged a level-controlled agitator (65) which is adapted to be switched off when there is a shortage of product in the degasifier.

14. Arrangement according to one of claims 7–13, characterised in that the degasifier (41) is provided with an overtemperature prevention device with a thermostat (84) and a magnetically operated valve (85), which device in the event of an exceeding of a maximum temperature in the degasified product issuing from the degasifier sucks air under atmospheric pressure into the degasifier.

15. Arrangement according to one of claims 7–14, characterised in that the degasifier (41) is provided with a negative pressure holding valve (43).

16. Arrangement according to one of claims 7–15, characterised in that the degasifier (41) is provided with an excess-pressure valve (60) for excess-pressure sterilisation and with built-in cleaning spray spheres (61, 62).

17. Arrangement according to one of claims 7–16, characterised in that there is built into a product discharge conduit (47) of the degasifier a tube probe (69) which immediately switches-off a suction extraction pump (48) in the event of total emptying of the degasifier.

18. Arrangement according to one of claims 7–17, with a control valve which is arranged before the inlet of the degasifier and which regulates the level in the degasifier characterised in that the control valve (45) is additionally operatable by manual control (64).

19. Arrangement according to one of claims 7–18, characterised in that in the flavour condensate conduits (70) issuing from the condensation apparatus (33, 34) there are situated throughflow inspection windows (71, 71a, 72) and regulating and sample-taking cocks (73, 74) through which the liquid flavour can be removed.

20. Arrangement according to one of claims 7–19, characterised in that a level-controlled speed-changeable agitator (21) is provided in the preliminary vessel (20).

21. Arrangement according to one of claims 7–20, characterised in that by means of a minimum-level probe (23) in the preliminary vessel a switch-over valve (50), which is situated downstream of the double-tube heat exchanger (2nd stage 28) provided for pasteurisation purposes, can be switched-over to product circulation back into the preliminary vessel (20).

22. Arrangement according to one of claims 7–21, characterised in that a level-controlled agitator (76) is provided in the filling apparatus (52).

23. Arrangement according to one of claims 7–22, characterised in that agitators (21, 65, 76) constructed as guide-jet mixers are arranged in the preliminary vessel (20) of the pasteurisation plant, the degasifier (41) and in the filling apparatus (52).

24. Arrangement according to one of claims 7–23, characterised in that the degasifier (41) is so dimensioned that when carrying out high-temperature degasification (90–95°C) a product dwell time (passage time) of 30–120 seconds is achieved.

25. Arrangement according to one of claims 7–24, characterised in that directly before the filling apparatus (52) in the product flow direction a multi-way valve (86) is adapted to be changed-over in such a manner by a float (87) in the filling apparatus that the product discharge conduit (47) of the negative-pressure degasifier (41) can be connected, bypassing the filling apparatus (52), via a bypass conduit (83, 82) to the double-tube heat exchanger (24) which is situated upstream of the preliminary vessel (20) in the return flow direction.

26. Arrangement according to one of claims 7–25, characterised in that temperature control devices for the product which is to be heated in the double-tube heat exchangers are provided with additional overtemperature protection devices (35, 37) in the respective hot water circuit.

27. Arrangement according to one of claims 7–26, characterised in that the degasifier (41) is provided with a 45° cone inlet nozzle (58) regulated by spring pressure, for 360° radius all-round spraying.

28. Arrangement according to one of claims 7–27, characterised in that the filling apparatus (52) has a built-in minimum-maximum thermosensor (80) with setting scale, which is coupled with a feed-back pump, and that a filler tank is connected to the preliminary vessel (20) by way of the feed-back pump (81), conduits (82) and the cooling double-tube heat exchanger (24).

29. Arrangement according to one of claims 7–28, characterised in that in the event of an undertemperature below the pasteurisation temperature set at thermostat means (at 58) in the product discharge conduit, the changeover valve (50) is adapted to be switched to product circulation through the cooling double-tube heat exchanger (24) back into the preliminary vessel.

30. Arrangement according to one of claims 7–29, characterised in that the conveying means are centrifugal pumps (4, 21a, 48, 54) or self-aspirating rotary-piston pumps (81).

**Revendications**

1. Procédé pour la préparation de jus d'agrumes et de boissons à base d'agrumes avec de la pulpe de fruit issue de la partie comestible des fruits, dans lequel le produit est dégazé, caractérisé en ce qu'on mélange de façon homogène un matériau de départ contenant du jus de fruit, des fibres de pulpe de fruit et des vésicules, sans intrusions d'air et sans lésion importante, découpage en morceaux, ni réduction de la pulpe, et en ce que le produit est encore, pendant une autre étape du procédé, agité à une vitesse suffisamment élevée pour que les fibres de pulpe de fruit et les vésicules soient maintenues en suspension.

2. Procédé selon la revendication 1, caractérisé en ce qu'on prépare le produit de départ avec de l'eau par dilution de concentré de jus de fruit et de pulpe de fruit à longues fibres ainsi que, le cas échéant, des aromes de jus de fruit.

3. Procédé selon la revendication 1 ou avec une pasteurisation ultérieure et une mise en bouteilles à chaud, caractérisé en ce qu'on chauffe d'abord le mélange homogène à 50° ou 60°C environ avant le dégazeur, on le dégaze ensuite sous vide, ensuite on le pasteurise, puis on le met en bouteilles.

4. Procédé selon la revendication 1 ou 2 avec une pasteurisation ultérieure et une mise en bouteilles, caractérisé en ce qu'on pasteurise d'abord le mélange homogène, on le dégaze ensuite à la température de pasteurisation (90 à 95°C), puis on le met en bouteilles à chaud.

5. Procédé selon l'une des revendications 1 à 4, caractérisé en ce qu'on condense en deux étapes le mélange se dégageant sous forme de vapeur lors du dégazage et contenant des produits aromatiques et on réintroduit le condensat aromatique récupéré de façon continue et suivant un débit quantitativement équivalent dans le flux de produit dégazé.

6. Procédé selon l'une des revendications 1 à 5, caractérisé en ce que, pendant la pasteurisation, le dégazage et la mise en bouteilles, on agite le produit à une vitesse suffisamment élevée pour que, bien qu'il n'y ait pas d'instrusions d'air, de lésion de découpage en morceaux, ni de réduction de la pulpe, le produit demeure cependant mélangé de façon homogène.

7. Installation pour la mise en pratique du procédé selon la revendication 1, caractérisé par une cuve de mélange (1) avec au moins un agitateur (5) dont la vitesse de mélange est commandée par le niveau les outils d'agitation de cet agitateur étant réalisés avec un stator (7) sans fente et étant disposés dans la cuve de mélange au voisinage de son fond (2, 2a) suivant un angle de montage, ainsi que par un dégazeur (41) relié à la cuve de mélange (1).

8. Installation selon la revendication 7, caractérisé en ce qu'un échangeur de chaleur à tubes jumelés (27, 28) avec récipient de tête (20) placé en amont est disposé entre la cuve de mélange (1) et le dégazeur (41).

9. Installation selon la revendication 8, caractérisé en ce que l'échangeur de chaleur à tubes jumelés (27, 28) est réalisé à deux étages.

10. Installation selon la revendication 8 ou 9, caractérisé en ce que pour récupérer de la chaleur, un échangeur de refroidissement prévu pour le refroidissement des récipients et des garnitures est en liaison avec l'échangeur de chaleur à tubes jumelés par l'intermédiaire d'une pompe de récupération et d'un appareil - contre-courant chauffé à la vapeur.

11. Installation selon la revendication 9 ou 10, caractérisé en ce qu'un dispositif de mise en bouteilles (52) est en liaison sélective avec l'extrémité de fond (42) du dégazeur (41) dans le cas du dégazage à température élevée ou avec la sortie du réchauffeur à tubes doubles (2ème étage 28) pour la pasteurisation dans le cas du dégazage à basse température.

12. Installation selon l'une des revendications 7 à 11, caractérisé par un dispositif de condensation à deux étages (33, 34) relié sous forme d'injecteur à une extrémité de tête du dégazeur (41) et dont la sortie de condensat est reliée, par l'intermédiaire d'un collecteur (70), à une conduite d'écoulement de produit (47) pour la sortie du produit du dégazeur (41).

13. Installation selon l'une des revendications 7 à 12, caractérisé en ce qu'un agitateur (65) à commande par niveau est disposé dans le dégazeur à dépression (41), cet agitateur pouvant être débranché en cas de manque de produit dans le dégazeur.

14. Installation selon l'une des revendications 7 à 13, caractérisé en ce que le dégazeur (41) est muni d'un dispositif de sécurité contre les températures trop élevées avec un thermostat (84) et une électrovanne (85), ce dispositif introduisant dans le dégazeur, en cas de dépassement d'une température maximale, du produit dégazé s'écoulant du dégazeur, de l'air à la pression atmosphérique.

15. Installation selon l'une des revendications 7 à 14, caractérisé en ce que le dégazeur (41) est muni d'une soupape de maintien de dépression (43).

16. Installation selon l'une des revendications 7 à 15, caractérisé en ce que le dégazeur (41) est muni d'une soupage de surpression (60) pour la stérilisation en surpression et de sphères incorporées (61, 62) de nettoyage par projection.

17. Installation selon l'une des revendications 7 à 16, caractérisé en ce qu'une sonde tubulaire (69) est montée dans une conduite d'écoulement de produit (47), cette sonde coupant sans délai une pompe d'aspiration (48) en cas de vidange totale du dégazeur.

18. Installation selon l'une des revendications 7 à 17, avec une vanne de réglage disposée avant l'admission du dégazeur et réglant le niveau dans le dégazeur, caractérisé en ce que la vanne de réglage (45) peut, de plus être actionnée par une commande à main (64).

19. Installation selon l'une des revendications 7 à 18, caractérisé en ce que dans les conduites de condensat aromatique (70) partant du dispositif de condensation (33, 34) sont disposés des voyants à circulation (71, 71a, 72) ainsi que des robinets de réglage et de prise d'échantillons (73, 74), par lesquels on peut prélever les liquides aromatiques.

20. Installation selon l'une des revendications 7 à 19, caractérisé en ce qu'un agitateur (21) commandé par niveau et à vitesse variable est prévu dans le récipient de tête (20).

21. Installation selon l'une des revendications 7 à 20, caractérisé en ce qu'au moyen d'une sonde de niveau minimum (23) dans le récipient de tête (20), une soupape d'inversion (50), disposée derrière l'échangeur de chaleur à tubes jumelés prévu pour la pasteurisation (2ème étage 28), peut être commutée pour la circulation du produit en retour dans le récipient de tête (20).

22. Installation selon l'une des revendications 7 à 21, caractérisé en ce qu'un agitateur (76) commandé par niveau est prévu dans le dispositif de mise en bouteilles (52).

23. Installation selon l'une des revendications 7 à 22, caractérisé en ce que des agitateurs (21, 65, 76) réalisés en tant que mélangeurs à jets directeurs sont disposés dans le récipient de tête (20) de l'installation de pasteurisation, dans le dégazeur (41) et dans le dispositif de mise en bouteilles (52).

24. Installation selon l'une des revendications 7 à 23, caractérisé en ce que le dégazeur (41) est dimensionné de façon qu'avec un dégazage à température élevée (90 à 95°C), on obtienne une durée de séjour du produit (temps de passage) de 30 à 120 secondes.

25. Installation selon l'une des revendications 7 à 24, caractérisé en ce qu'une vanne à plusieurs voies (86), située immédiatement avant le dispositif de remplissage (52) dans le sens d'écoulement du produit, peut être actionnée par un flotteur (87) disposé dans ce dispositif de mise en bouteilles de manière que la conduite (47) d'écoulement de produit du dégazeur sous dépression (41) puisse, en contournant le dispositif de mise en bouteilles (52) par une conduite de dérivation (83, 82), être raccordée à l'échangeur de chaleur à tubes jumelés (24) disposé avant le récipient de tête (20) dans le sens du retour.

26. Installation selon l'une des revendications 7 à 25, caractérisé en ce que des dispositifs de commande de température pour le produit à réchauffer dans les échangeurs de chaleur à tubes jumelés sont équipés de dispositifs de sécurité supplémentaires (36, 37) contre les températures trop élevées dans chaque circuit d'eau chaude.

27. Installation selon l'une des revendications 7 à 26, caractérisé en ce que le dégazeur (41) est équipé d'une buse à entrée conique (58) réglée à 45° par pression de ressort pour une pulvérisation radiale sur 360°.

28. Installation selon l'une des revendications 7 à 27 caractérisé en ce que le dispositif de mise en bouteilles (52) comporte un détecteur thermique minimum-maximum incorporé (80) avec échelle de réglage, ce détecteur étant accouplé avec une pompe d'alimentation en retour, et en ce qu'un ballon de remplissage est en liaison avec le récipient de tête (20) par l'intermédiaire de la pompe d'alimentation en retour (81), de conduites (82) ainsi que de l'échangeur de chaleur de refroidissement à tubes jumelés (24).

29. Installation selon l'une des revendications 7 à 28, caractérisé en ce qu'en cas de température basse inférieure à la température de pasteurisation réglée au thermostat (en 58) dans la conduite d'écoulement de produit, la soupape d'inversion (50) peut être commandée pour la circulation du produit par l'échangeur de chaleur de refroidissement à tubes jumelés (24) en retour dans le récipient de tête.

30. Installation selon l'une des revendications 7 à 29, caractérisé en ce que les dispositifs de refoulement sont des pompes centrifuges (4, 21a, 48, 54) ou des pompes à pistons circulaires (81) auto-aspirantes.

Fig.1

Fig. 2

0 100 833

Fig.3

19

Fig 4

Fig. 5

Fig. 6